# FASCICULE DE BREVET EUROPEEN

(11) **EP 1 815 097 B1**
(45) Date de publication et mention de la délivrance du brevet: **18.08.2010**
(21) Numéro de dépôt: 05819398.8
(22) Date de dépôt: 18.11.2005
(51) Int. Cl.: E05D 11/00

(54) **ARMOIRE ELECTRIQUE AVEC CONNEXION ELECTRIQUE A SA PORTE**
ELEKTRISCH MIT SEINER TÜR VERBUNDENER ELEKTRISCHER SCHALTSCHRANK
ELECTRICAL CABINET ELECTRICALLY CONNECTED TO ITS DOOR

(30) Priorité: 19.11.2004 FR 0452692
(43) Date de publication de la demande: 08.08.2007
(73) Titulaire: AIRBUS OPERATIONS (S.A.S), 31060 Toulouse (FR)
(72) Inventeur: GUERING, Bernard, F-31850 MONTRABE (FR)
(74) Mandataire: Lebrette, Camille
(86) Numéro de dépôt international: PCT/FR2005/050964
(87) Numéro de publication internationale: WO 2006/054028

(56) Documents cités:
- EP-A- 1 408 190
- DE-A1- 19 707 594
- US-A- 3 355 695
- US-A- 5 941 619

## Description

L'invention concerne une armoire électrique avec connexion électrique à sa porte. L'invention a pour but de diminuer un encombrement généré par des câbles électriques placés à l'intérieur d'un compartiment d'équipement électrique formé par l'armoire. L'invention peut s'appliquer dans tout domaine technique utilisant de telles armoires électriques équipées de composants électriques. Notamment, l'invention peut s'appliquer dans le domaine de l'aéronautique. Dans un autre exemple, l'invention peut aussi s'appliquer dans le domaine de l'équipement des immeubles de bureau.

Une armoire électrique, comme celle décrite par exemple dans le document DE 197 07 594, comporte un boîtier électrique, une porte de fermeture et une charnière mécanique. Le boîtier forme un compartiment d'équipement électrique débouchant par une ouverture. La porte coopère avec le boîtier électrique par l'intermédiaire de la charnière en basculant entre au moins une position de fermeture et entre au moins une position d'ouverture. La position de fermeture de la porte est une position de la porte dans laquelle la porte recouvre une surface délimitée par l'ouverture du compartiment d'équipement. La position d'ouverture de la porte est une position de la porte dans laquelle la surface délimitée par l'ouverture du compartiment n'est pas recouverte par la porte. La porte bascule par rapport au boîtier par l'intermédiaire de la charnière.

La charnière est formée par au moins un premier moyen de liaison, par au moins un deuxième moyen de liaison et par un moyen d'articulation du premier moyen de liaison au deuxième moyen de liaison. Le premier moyen de liaison est fixé au boîtier et le deuxième moyen de liaison est fixé à la porte. Le moyen d'articulation peut être formé par une tige de maintien s'étendant le long d'un axe de rotation de la charnière. L'axe de rotation de la charnière est un axe autour duquel s'articule le deuxième moyen de liaison par rapport au premier moyen de liaison pour permettre à la porte de basculer par rapport au boîtier électrique.

Dans un exemple simple de réalisation, ces moyens de liaison comportent de simples charnons au travers desquels passe la tige. Dans une application particulièrement visée par l'invention, le boîtier comporte des composants électriques. Ces composants électriques doivent être reliés par des câbles électriques à d'autres composants électriques, par exemple en grand nombre, fixés sur la porte. Le fait de fixer des composants sur la porte permet d'une part de garnir l'armoire avec beaucoup de composants, et d'autre part de conserver une très bonne accessibilité à tous les composants. Il suffit d'ouvrir la porte de l'armoire pour avoir accès aux composants contenus dans le compartiment et à ceux fixés sur la porte.

Les composants fixés dans le boîtier ou sur la porte sont souvent présentés en batterie. Dans le domaine de l'aéronautique, il peut s'agir par exemple de relais électriques ou de témoins électriques affectés à un ensemble d'équipements d'un avion. Par exemple, ces équipements d'avion sont des consoles de commande placées à disposition près de chaque siège de l'avion. Dans le domaine de l'équipement des immeubles, ces composants peuvent être des relais électriques ou des disjoncteurs affectés à des lampes de l'immeuble (notamment des lampes de sûreté).

Les composants sont donc fixés dans le boîtier et sur la porte. Ils sont reliés entre eux par des fils électriques. Chacun de ces fils est fixé à un composant par une extrémité à l'intérieur du compartiment et doit être relié à un autre composant sur la porte à son autre extrémité. Eventuellement cette liaison peut comporter un connecteur à cette autre extrémité.

Le montage de ces connexions électriques est effectué progressivement. Normalement un monteur commence par équiper les composants en batterie. Il connecte par exemple un fil à chacun de ces composants. Puis il organise les fils qu'il a connectés en faisceaux. Ces faisceaux sont ensuite correctement ligaturés pour que l'ensemble des fils qui les constituent ne forme pas un écheveau inextricable. Il arrive ainsi que plusieurs faisceaux, de chacun une trentaine ou une soixantaine de fils soient formés.

Ces faisceaux doivent relier des composants dans la porte à des composants dans le boîtier. Puisque la porte est mobile en ouverture, ces faisceaux doivent posséder une certaine souplesse pour autoriser les ouvertures et les fermetures de la porte. En pratique, on forme les faisceaux en U. Les deux branches du U sont parallèles à l'axe de la charnière. Quand la porte s'ouvre ou se ferme, les deux branches du U subissent un mouvement de rotation sur elles-mêmes, en même temps qu'elles s'écartent ou se rapprochent l'une de l'autre. La rotation est permise parce que le nombre de fils dans chaque faisceau n'est pas excessif. A la fermeture, le rapprochement est autorisé par le creusement du U : les branches du U s'allongent et récupèrent ainsi le jeu de longueur disponible. A l'opposé, lors de l'ouverture, les deux branches s'écartent l'une de l'autre, et le fond du U monte. Il est possible de monter aussi le U à l'envers, avec ses branches orientées vers le bas.

La présence des faisceaux en U contribue à encombrer un espace contenu dans le compartiment d'équipement d'une telle armoire électrique. Une aération du compartiment nécessaire à un fonctionnement électrique correct des composants électriques contenus à l'intérieur du compartiment de l'armoire électrique peut être rendue difficile. En effet, la densité de câbles résultant peut nuire à une évacuation thermique normalement nécessaire pour un fonctionnement correct des composants électriques.

Pour résoudre ce problème d'encombrement, on peut simplifier l'acheminement des câbles depuis le compartiment de l'armoire en direction de la porte de l'armoire en faisant passer les câbles électriques au travers de la charnière,

le document US-3355695 décrit une charnière formée de deux moyens de liaison articulés entre eux et percés d'un orifice de passage au travers duquel sont acheminés des fils électriques.

L'invention veut permettre un acheminement des câbles électriques nettement simplifié dans le compartiment d'équipement électrique, ainsi qu'un gain de temps pour placer les câbles dans le compartiment.

Un autre avantage est lié à une diminution des problèmes liés aux frottements des câbles, entre eux, contre le boîtier ou contre la porte lors de la coopération de la porte avec le boîtier. Cette diminution des frottements permet de diminuer les risques de ruptures ou d'usures précoces des fils électriques.

Un autre avantage de l'invention est d'optimiser un aménagement de câbles électriques contenu dans le compartiment de l'armoire afin de rendre l'installation électrique d'une telle armoire plus aisée et plus fiable au niveau sécurité.

L'invention a donc pour objet une armoire électrique selon la revendication 1.

L'invention sera mieux comprise à la lecture de la description qui suit et à l'examen des figures qui l'accompagnent, celles-ci ne sont présentées qu'à titre indicatif et nullement limitatif de l'invention. Les figures montrent :
- figure 1 : Une représentation schématique d'une armoire électrique, selon l'invention ;
- figure 2 : Une coupe longitudinale d'une armoire électrique à un endroit correspondant à une charnière, selon l'invention ;
- figure 3 : Une représentation schématique d'un moyen de liaison, selon l'invention ;
- figure 4 : Un agrandissement d'une charnière, selon l'invention.

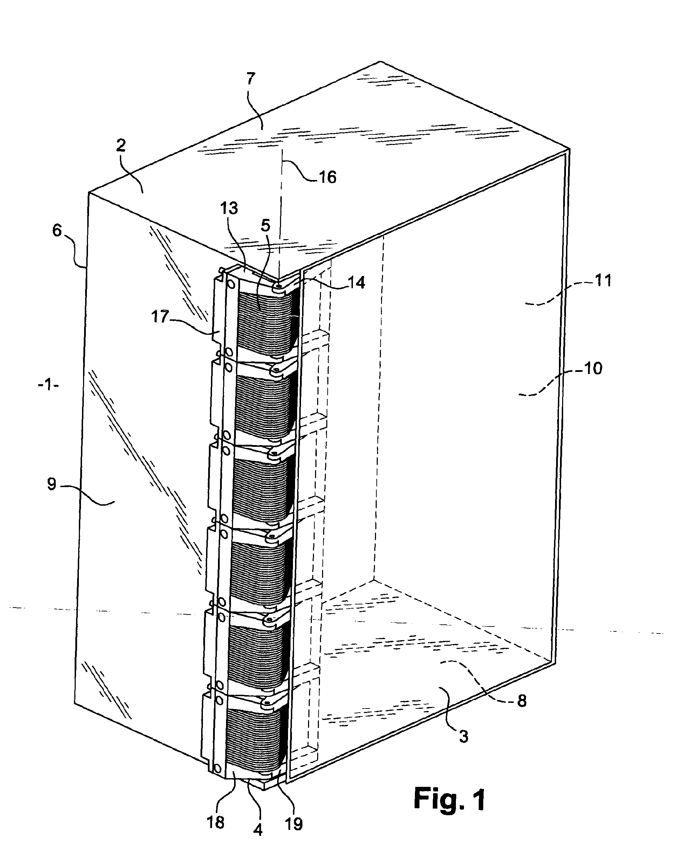

La figure 1- illustre une-armoire électrique 1, selon l'invention. Cette armoire 1 peut être une armoire du type armoire à relais, armoire à disjoncteur que l'on rencontre dans le domaine de l'aéronautique et également dans le domaine des immeubles de bureau.

Cette armoire 1 est de forme globalement parallélélipèdique. Cette armoire 1 comporte un boîtier 2, une porte de fermeture 3 et une charnière 4.

Le boîtier 2 forme intérieurement un compartiment d'équipement électrique 11. Le boîtier 2 est délimité par une cloison arrière 6, une cloison supérieure 7, une cloison inférieure 8 et deux cloisons latérales 9, 10. La cloison arrière 6, la cloison supérieure 7, la cloison inférieure 8 et les deux cloisons latérales 9, 10 délimitent le compartiment 11. Ce compartiment renferme des composants électriques (non représentés), des fils électriques tels que 5, etc. Le compartiment d'équipement 11 débouche par une ouverture 12.

La porte 3 est placée parallèlement à la cloison arrière 6 tout en étant installée sur des rebords des cloison inférieure 8, supérieure 7 et latérales 9, 10. La porte 3 peut être positionnée entre une position de fermeture et une position d'ouverture par rapport au boîtier 2. La position de fermeture de la porte 3 est une position de la porte 3 par rapport au boîtier 2 dans laquelle une surface délimitée par l'ouverture 12 du compartiment est recouverte par la porte 3. La position d'ouverture de la porte 3 est une position de la porte 3 par rapport au boîtier 2 dans laquelle la surface délimitée par l'ouverture 12 n'est pas recouverte par la porte 3. La figure 1 illustre une position de fermeture de la porte. La porte 3 bascule entre la position de fermeture et la position d'ouverture par l'intermédiaire de la charnière 4.

La charnière 4 comporte au moins un premier moyen de liaison 13 et au moins un deuxième moyen de liaison 14. Le premier moyen 13 est fixé au boîtier 2 et le deuxième moyen 14 est fixé à la porte 3. Le premier moyen de liaison et le deuxième moyen de liaison sont reliés l'un avec l'autre par un moyen d'articulation (non représenté). Ce moyen d'articulation peut être une vis et un écrou. Ou bien ce moyen d'articulation peut former une tige de maintien traversant le premier moyen 13 et le deuxième moyen 14 tout en maintenant le premier moyen au deuxième moyen par rapport à un axe 16 de rotation de la charnière 4 et réciproquement. Cette tige de maintien peut s'étendre le long d'un axe se confondant avec l'axe 16 de rotation de la charnière 4. Cet axe 16 de-rotation-est un-axe autour duquel bascule la porte 3 par rapport au boîtier 2.

L'armoire 1 comporte également des composants électriques et des fils électriques 5. Les composants électriques sont installés à l'intérieur du compartiment 11 le long d'au moins une des cloisons 6, 7, 8, 9 ou 10 du boîtier 2 et/ou le long de la porte 3 sur un côté de la porte placé en regard du compartiment 11. Les composants électriques peuvent également être installés à l'extérieur du compartiment 11, sur le boîtier et/ou sur la porte. Plusieurs fils électriques tels que 5 regroupés peuvent former un câble électrique ou faisceaux de fibres électriques. Ces fils sont connectés aux composants électriques.

Selon l'invention, les moyens de liaison sont percés d'un orifice de passage 18, 19 au travers duquel sont acheminés les fils électriques. Le premier moyen de liaison 13 et le deuxième moyen de liaison 14 comportent chacun un orifice de passage 18 et 19 respectivement. De tels moyens de liaison permettent d'empêcher les fils électriques 5 d'être pliés en force contre la porte 3 et contre le boîtier 2 lors du basculement de la porte contre le boîtier pour aboutir à la position de fermeture de la porte 3.

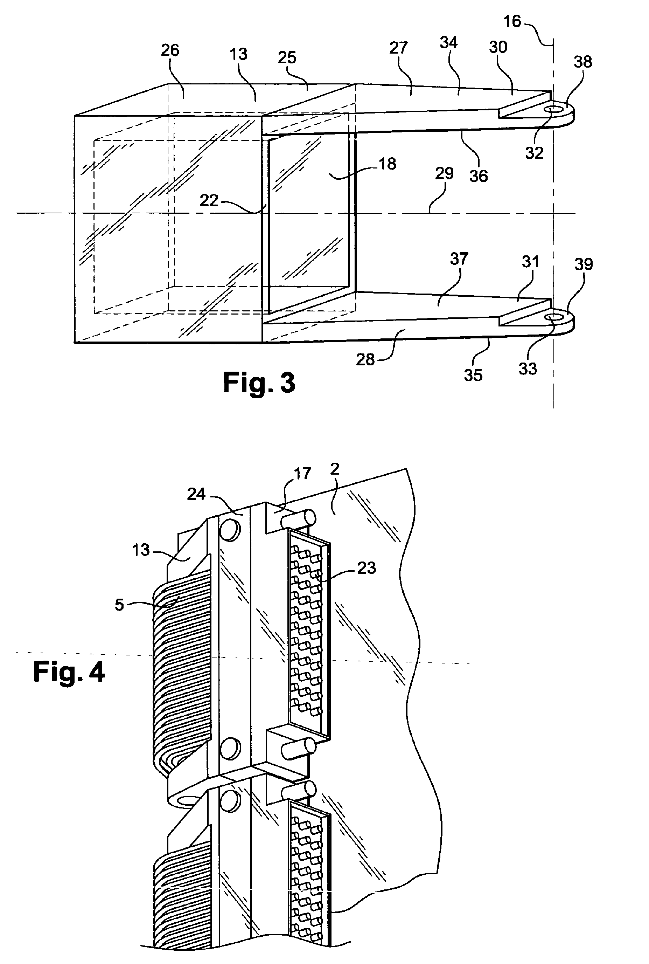

La figure 3 représente un premier moyen de liaison ou un deuxième moyen de liaison. Un tel moyen de liaison est formé par un bloc de matériau de forme parallélépipèdique. Dans un exemple préféré de l'invention, le premier moyen de liaison 13 et le deuxième moyen de liaison 14 forment chacun une pièce identique l'une par rapport à l'autre. Un tel moyen de liaison peut former une pièce moulée par injection d'un matériau isolant, tel du plastique. L'injection de matériau plastique présente l'avantage d'être une technique de relativement faible coût. Ou bien un moyen de liaison peut être formé par usinage d'un matériau plastique ou métallisé.

L'orifice de passage 18, 19 est formé au travers du bloc longitudinalement par rapport à un axe 29 d'insertion des fils électriques au travers de la charnière 4. Cet axe 29 d'insertion est un axe perpendiculaire à l'axe 16 de rotation. L'orifice 18, 19 délimite donc une paroi 22 formée par le moyen de liaison. L'orifice 18, 19 permet de guider les fils électriques par l'intermédiaire de la paroi 22 parallèlement à un plan formé par un support sur lequel est fixé le moyen de liaison. Un support peut être formé par la porte 3 ou par une des cloisons 6, 7, 8, 9, 10 formant le boîtier 2.

Un moyen de liaison 13, 14 comporte longitudinalement à l'axe 29 d'insertion et de part et d'autre d'un axe parallèle à l'axe 16 de rotation, une première terminaison 25 et une deuxième terminaison 26. La première terminaison 25 est prolongée par un premier bras 27 et par un deuxième bras 28, le premier bras et le deuxième bras s'étendant relativement perpendiculairement à l'axe 16 de rotation de la charnière 4 et longitudinalement à l'axe 29 d'insertion des fils électriques au travers du moyen de liaison. Chacun des bras 27 et 28 s'étend également dans un plan relativement perpendiculaire à l'axe de rotation 16. Un tel moyen de liaison est réalisé de telle manière que l'orifice de passage forme un conduit rectiligne le long de l'axe d'insertion 29 prolongé par un espace délimité par le premier bras et par le deuxième bras. Le premier bras 27 et le deuxième bras 28 comportent une extrémité 30 et une extrémité 31 respectivement. Chaque extrémité est percée d'un méat 32, 33 respectivement qui est destiné à être traversé par le moyen d'articulation. Ainsi le méat d'un premier bras se superpose à un autre méat du deuxième bras longitudinalement à l'axe de rotation 16.

Le premier bras 27 et le deuxième bras 28 comportent chacun une face externe 34, 35 et une face interne 36, 37. Chacune des faces internes 36 et 37 délimite une partie de l'orifice de passage 18, 19 tandis que chacune des faces externes est placée à l'opposée des faces internes correspondantes. Dans l'exemple figure 3, les faces internes sont placées chacune dans un plan parallèle à l'axe d'insertion 29 et les faces externes sont placées chacune dans un plan légèrement incliné par rapport à l'axe d'insertion 29 tout en étant orienté vers l'axe d'insertion 29. De tels formes de bras permet de diminuer le poids et de diminuer le coût de fabrication d'une charnière résultante.

L'extrémité 30 du premier bras 27 et l'extrémité 31 du deuxième bras 28 comportent un premier décrochement 38 et un deuxième décrochement 39 respectivement, figure 3. Le premier décrochement 38 et le deuxième décrochement 39 sont formés sur la face externe 34 du premier bras 27 et sur la face interne 37 du deuxième bras 28 respectivement. Le premier décrochement 38 et le deuxième décrochement 39 peuvent aussi être formés sur la face interne 36 du premier bras 27 et sur la face externe 35 du deuxième bras 28 respectivement. Ou bien, le premier décrochement 38 et le deuxième décrochement 39 peuvent aussi être formés sur la face interne 36 du premier bras 27 et sur la face interne 37 du deuxième bras 28 respectivement. Ou bien enfin, le premier décrochement 38 et le deuxième décrochement 39 peuvent aussi être formés sur la face externe 34 du premier bras 27 et sur la face externe 35 du deuxième bras 28 respectivement.

Afin de diminuer un coût de fabrication de telles armoires, le premier décrochement 38 et le deuxième décrochement 39 sont de préférence, formés sur la face externe 34 du premier bras et sur la face interne 37 du deuxième bras. Un seul moule peut ainsi être réalisé pour fabriquer le premier moyen de liaison et le deuxième moyen de liaison formant la charnière selon l'invention.

Un premier moyen de liaison d'une paire de moyens de liaison donnée peut coopérer avec un deuxième moyen de liaison de cette même paire de moyens de liaison en plaçant chaque premier décrochement tel que 27 en correspondance les uns des autres et chaque deuxième décrochement tel que 28 en correspondance les uns des autres également. Le deuxième moyen est placé par rapport au premier moyen symétriquement par rapport à un axe parallèle à l'axe de rotation 16 tout en étant retourné sur 180° autour de l'axe d'insertion 29 des fils électriques. Ainsi le premier moyen de liaison d'une paire de moyens de liaison donnée s'imbrique par complémentarité de forme dans le deuxième moyen de liaison de la même paire et réciproquement par accolement d'un premier décrochement et d'un deuxième décrochement du premier moyen 13 avec un autre premier décrochement et un autre deuxième décrochement du deuxième moyen de liaison 14.

L'accolement des premiers décrochements correspondants et des deuxièmes décrochement correspondants permet de maintenir relativement rigide la charnière le long de l'axe de rotation de la charnière.

Une armoire 1 peut comporter plusieurs paires de moyens de liaison. Dans un exemple figure 1, l'armoire 1 comporte six paires de moyens de liaison. Chaque paire de moyens de liaison donnée est apte à accueillir un nombre donné de fils électriques. Dans un exemple, chaque paire de moyens de liaison peut accueillir 66 fils électriques.

Chacun des fils électriques est formé en une anse dont le plan est perpendiculaire à l'axe 16 de la charnière. Les fils électriques sont présentés en des nappes de fils adjacents. Le plan de ces nappes est perpendiculaire à l'axe de la charnière, des fils de ces nappes présentant des courbures, dans ce plan, dans deux sens.

Les composants électriques peuvent être installés à l'intérieur de la porte, face au compartiment 11. Ou bien, les composants électriques peuvent être installés à l'extérieur de la porte.

Le premier moyen 13 et le deuxième moyen 14 peuvent être fixés respectivement au boîtier 2 et à la porte 3 au moyen de vis telles que 20 et 21.

Dans l'exemple figure 1, le premier moyen 13 est fixé le long du boîtier 2 à l'extérieur du compartiment 11. Le deuxième moyen 14 est fixé sur la porte 3 à un endroit placé en regard du compartiment 11 le long d'un côté de cette même porte. Plus particulièrement, la porte comporte un premier côté 3' et un deuxième côté 3", le premier côté 3' étant situé en regard du compartiment 11 tandis que le deuxième côté 3" est situé à l'opposé du compartiment. Le premier côté 3' de la porte 3 est destiné à être placé en regard du compartiment 11 lorsque la porte 3 est en position de fermeture par rapport au boîtier. Ainsi, le deuxième moyen 14 est plus particulièrement destiné à être placé sur le premier côté 3' de la porte 3, en regard du compartiment 11. Mais ce deuxième moyen 14 pourrait être placé sur le deuxième côté 3".

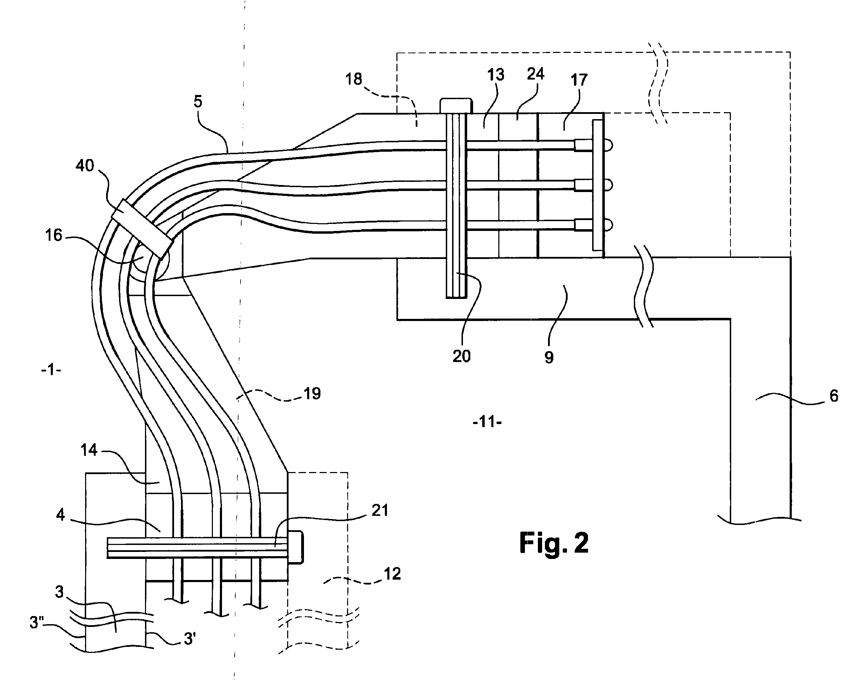

En positionnant le premier moyen 13 et le deuxième moyen 14 selon l'exemple figure 1, les fils électriques peuvent être acheminés depuis l'intérieur du compartiment vers l'extérieur du compartiment et réciproquement. Le fil est acheminé depuis l'intérieur de compartiment 11 en direction de l'extérieur du compartiment 11 tout en étant accolé le long de la porte 3 à l'intérieur du compartiment 11 sur le premier côté 3' et le long du boîtier 2 à l'extérieur du compartiment 11 de part et d'autre de l'axe 16 de rotation de la charnière 4, figures 1 et 2. Ou bien, le fil est acheminé depuis l'intérieur de compartiment 11 en direction de l'extérieur du compartiment 11 tout en étant accolé le long du boîtier 2 à l'intérieur du compartiment 11 et le long de la porte 3 à l'extérieur du compartiment 11, sur le deuxième coté 3" de part et d'autre de l'axe 16 de rotation de la charnière 4.

Selon ce même exemple figure 1, un connecteur électrique 17 est relié à au moins l'un des moyens de liaison. Dans un exemple, chacun des moyens de liaison 13 et 14 est relié à un connecteur tel que 17. Une telle liaison du connecteur 17 à au moins l'un des moyens de liaison permet de diminuer une longueur du fil électrique 5 nécessaire pour être acheminé depuis l'intérieur du compartiment 11 en direction de l'extérieur du compartiment 11. De plus, une telle liaison du connecteur 17 à l'un au moins des moyens de liaison permet également d'empêcher le fil électrique 5 d'être plié en force contre la porte 3 et contre le boîtier 2 lors du basculement de la porte contre le boîtier pour aboutir à la position de fermeture de la porte 3.

Le connecteur 17 comporte au moins un contact métallique tel que 23 destiné à être relié à un fil électrique 5 en correspondance. Dans un exemple figure 4, le connecteur 17 comporte 66 contacts métalliques tels que 23. Chacun de ces contacts peut former un contact mâle ou un contact femelle. Par l'intermédiaire de ces mêmes contacts, le connecteur 17 peut se connecter à un connecteur électrique complémentaire (non représenté). Dans un exemple, les contacts métalliques du connecteur forment des bornes mâles en forme de broche, lesquels broches étant destinées à s'insérer au travers de douilles (non représentées) du connecteur complémentaire, lesquelles douilles formant des contacts femelles.

Le connecteur 17 peut être fixé au premier moyen 13 de liaison par complémentarité de forme. Plus précisément, le connecteur peut être relié au premier moyen 13 par encastrement. Le connecteur 17, le premier moyen de liaison 13 et le deuxième moyen de liaison 14 peuvent être fixés au boîtier 2 et/ou à la porte 3 par vissage au moyen de vis par exemple.

Les fils électriques sont regroupés tout en contournant l'axe de rotation 16. Les fils sont maintenus tendus et regroupés par rapport à l'axe 16 selon un axe perpendiculaire à l'axe 16. Pour ce faire, les fils électriques d'une nappe sont maintenus regroupés par rapport à l'axe 16 au travers de la charnière par un élément de maintien 40 élastique qui les enveloppe par paquet. Cet élément de maintien 40 est étendu autour de paquets de fils longitudinalement par rapport à l'axe 16 de rotation. L'élément de maintien 40 regroupe les fils non seulement autour de l'axe 16 mais maintien également les fils relativement tendus selon un axe perpendiculaire à l'axe 16. Cet élément de maintien 40 peut former un ruban souple, en matériau plastique et élastique. Dans un exemple, un élément de maintien est placé autour de paquet de fils par paire de moyens de liaison.

Un moyen de rétention 24 de fils électriques peut être interposé entre le connecteur 17 et le premier moyen 13 de liaison. Ce moyen de rétention 24 joue un rôle de rétention des fils électriques connectés chacun à un contact métallique 23 du connecteur 17 en correspondance lors d'un connexion électrique et d'une déconnexion électrique du connecteur 17 d'avec le connecteur complémentaire. Ce moyen de rétention 24 joue également un rôle d'étanchéité vis-à-vis de l'air de la connexion électrique entre le contact métallique 23 du connecteur 17 et une extrémité du fil électrique 5 destinée à être reliée au contact métallique 23 en correspondance.

Dans un exemple, ce moyen de rétention 24 peut être formé par un bloc en matériau plastique. Ce bloc 24 est percé d'une multitude de trous (non représentés) régulièrement réparti les uns par rapport aux autres. Chacun de ces trous est formé le long d'un axe perpendiculaire à l'axe 16 de rotation de la charnière 4 et longitudinalement à l'axe 29 d'insertion. Les fils électriques peuvent être insérés au travers de chacun des trous correspondant de ce bloc 24 de manière à ce que ces fils soient maintenus en place lors d'une connexion ou déconnexion électrique du connecteur électrique 17 avec le connecteur électrique complémentaire. Les fils sont insérés au travers du bloc 24 de manière à ce que, dans les trous correspondant, les fils adhèrent par frottement au matériau formant le bloc. De préférence, le bloc est formé par du caoutchouc. Le bloc 24 joue le rôle de rétention d'extrémités de fils électriques. Les fils peuvent alors être maintenus par soudure à un contact métallique correspondant sans risque d'être arrachés de leur contact correspondant, particulièrement lors d'une déconnexion électrique du connecteur électrique 17 d'avec le connecteur électrique complémentaire. Le bloc 24 en matériau plastique peut être fixé par vissage ou par collage au boîtier ou à la porte. Ce même bloc peut être interposé entre le moyen de liaison et le connecteur 17 tout en s'imbriquant dans le moyen de liaison et dans le connecteur 17.

Dans une variante de l'invention, le moyen de rétention peut être formé par un dispositif de serre-câble (non représenté). Ce dispositif tend à comprimer les fils électriques placés en sortie du moyen de liaison perpendiculairement à l'axe 29 d'insertion des fils dans le moyen de liaison contre le boîtier ou contre la porte. Ce-dispositif permet également de maintenir en place des extrémités de fils électriques, lesquels fils étant destinés à être connectés au connecteur électrique. Ce dispositif serre-câble peut comporter au moins une plaque rigide et au moins une vis. Une première plaque et une deuxième plaque peuvent être placées de part et d'autre des fils électriques parallèlement à un plan formé par la porte ou par le boîtier, la deuxième plaque étant accolée à la porte ou au boîtier. Cette première plaque et cette deuxième plaque sont formées d'un matériau relativement déformable par des fils électriques de manière à favoriser la rétention des fils électriques entre la première plaque et la deuxième plaque. Dans un exemple, cette première plaque et cette deuxième plaque peuvent être réalisées en caoutchouc. La première plaque est amenée en direction de la porte ou du boîtier par vissage de la vis dans la porte ou dans le boîtier au travers de la première plaque et de la deuxième plaque. Le vissage de la vis dans la porte ou dans le boîtier entraîne un rapprochement de la première plaque en direction du boîtier ou de la porte ce qui entraîne une compression des fils placés entre la première plaque et la deuxième plaque. Une telle compression est réalisée de manière à maintenir suffisamment en place des fils électriques pour éviter que les fils ne soient arrachés des contacts métalliques sur lesquels ils sont fixés au moment d'une déconnexion électrique du connecteur électrique d'avec le connecteur complémentaire.

Les fils sont comprimés tout en déformant localement la première plaque et la deuxième plaque. Une telle déformation de la première plaque et de la deuxième plaque permet de maintenir en place les fils par rapport au connecteur 17.

Le procédé de montage de l'armoire électrique 1 selon l'invention est réalisé de la manière suivante. On fixe d'abord chacune des premières extrémités des fils électrique à un composant électrique correspondant d'un premier jeu de composants situé dans le compartiment 11 sur la porte ou sur le boîtier. Puis, les fils sont insérés au travers de la charnière perpendiculairement à l'axe de rotation. Et ensuite chacune des deuxièmes extrémités des fils est fixée un autre composant électrique correspondant d'un deuxième jeu de composants qui est situé sur le boîtier ou sur la porte respectivement, à l'extérieur du compartiment 11.

Dans une autre variante de l'invention, on fixe d'abord une première extrémité du fils électrique au connecteur 17, figure 2. Puis, le fil est inséré au travers de la charnière perpendiculairement à l'axe de rotation. Et ensuite la deuxième extrémité du fils est fixée à un composant électrique situé dans le compartiment sur la porte.

Les fils peuvent être regroupés par paquet au travers de la charnière en enveloppant lesdits fils au moyen de l'élément de maintien 40.

Entre le connecteur 17 et la charnière 4 peut être interposé un moyen de rétention 24 des fils électriques tel que précédemment décrit au travers duquel peuvent être insérés des extrémités de fils électriques.

Dans un souci de gain de temps et de coût, il est possible de fournir le connecteur électrique 17 déjà pré-câblé. Les fils 5 connectés aux cosses du connecteur électrique 17 présentent une surlongueur. Il suffit alors, pour les connecter à la porte 3, d'en ajuster la longueur et de les sertir sur les composants électrique, après les avoir passé, au préalable, au travers des orifices du deuxième moyen de liaison (14).

## Revendications

1. Armoire électrique (1), comportant
- un boîtier (2) électrique formant intérieurement un compartiment d'équipement électrique (11),
- une porte (3) de fermeture de ce compartment (11),
- une charnière(4) formée par un premier moyen de liaison (13) et par un deuxième moyen de liaison (14), le premier moyen de liaison (13) étant fixé au boîtier, le deuxième moyen (14) étant fixé à la porte, le premier moyen et le deuxième moyen s'articulant autour d'un axe (16) de rotation de la charnière,
- au moins un jeu de composants électriques installés sur la porte et/ou à l'intérieur du compartiment, et
- des fils électriques (5) connectés aux composants électriques, **caractérisée en ce que**
- les fils électriques (5) sont présentés en des nappes de fils adjacents, le plan de ces nappes est perpendiculaire à l'axe (16) de la charnière, des fils de ces nappes présentant des courbures, dans ce plan, dans deux sens, et **en ce que**
- les moyens de liaison (13,14) sont percés d'un orifice de passage (18,19) au travers duquel sont acheminés les fils électriques (5), l'orifice de passage (18,19) étant formé longitudinalement par rapport à un axe (29) d'insertion des fils électriques (5) au travers de la charnière, l'axe d'insertion étant un axe perpendiculaire à l'axe (16) de rotation.

2. Armoire selon la revendication 1, **caractérisé en ce que** chacun des fils électriques (5) est formé en une anse dont le plan est perpendiculaire à l'axe (16) de la charnière.

3. Armoire selon la revendication 1 ou 2, **caractérisée en ce que** les fils électriques (5) d'une nappe sont maintenus au travers de la charnière par un élément de maintien (40) élastique qui les enveloppe.

4. Armoire selon l'une des revendications 1 à 3, **caractérisée en ce que** le jeu de composants est installé à l'intérieur de la porte (3), face au compartiment (11).

5. Armoire selon l'une des revendications 1 à 3, **caractérisée en ce que** le jeu de composants est installé à l'extérieur de la porte (3).

6. Armoire selon l'une des revendications 1 à 5, **caractérisée en ce qu'**elle comporte un connecteur (17) fixé à un des moyens de liaison (13,14), de préférence des connecteurs fixés à chacun des moyens de liaison.

7. Armoire selon la revendication 6, **caractérisée en ce que**
- chaque fil électrique (5) comporte une première extrémité et une deuxième extrémité, la première extrémité étant éloignée du connecteur (17) tandis que la deuxième est proche du connecteur, et
- un moyen de rétention (24) de la deuxième extrémité du fil est interposé entre le connecteur (17) et le moyen de liaison lié au connecteur, ce moyen de rétention (24) maintenant fixement en place la deuxième extrémité du fil en regard du connecteur (17) lors d'une connexion ou déconnexion électrique du connecteur (17) d'avec un connecteur complémentaire.

8. Armoire selon la revendication 7, **caractérisée en ce que** le moyen de rétention (24) forme un bloc en matériau élastique percé d'une multitude de trous régulièrement répartis les uns par rapport aux autres, chacun des trous étant formé le long d'un axe perpendiculaire à l'axe (16) de rotation de la charnière, et chacun de ces trous étant destiné à être traversé par un fils électrique.

9. Armoire selon la revendication 7, **caractérisée en ce que** le moyen de rétention forme un dispositif de serre-câble comprimant les fils (5) perpendiculairement à un axe (29) d'insertion des fils dans le moyen de liaison contre le boîtier ou contre la porte.

10. Armoire selon l'une des revendications 1 à 9, **caractérisée en ce que** le premier moyen de liaison (13) et le deuxième moyen de liaison (14) forment chacun une pièce identique l'un par rapport à l'autre.

11. Armoire selon l'une des revendications 1 à 10, **caractérisée en ce que** le premier moyen (13) et le deuxième moyen (14) forment chacun une pièce issue d'un moulage d'un matériau isolant.

12. Procédé de montage d'une armoire électrique selon l'une des revendications précédentes, **caractérisé en ce qu'**il comporte l'étape suivante
- insérer les fils électriques (5) au travers de la charnière perpendiculairement à l'axe de rotation.

13. Procédé de montage selon la revendication 12, **caractérisé en ce qu'**il comporte les étapes suivantes
- fixer une première extrémité du fils électrique à un connecteur électrique (17), et
- fixer une deuxième extrémité de fils à un composant électrique.

14. Procédé selon l'une des revendications 12 à 13, **caractérisé en ce qu'**il comporte l'étape suivante
- regrouper plusieurs fils électriques (5) au travers de la charnière en les enveloppant au moyen d'un élément de maintien (40) pour maintenir les fils (5) tendus selon un axe perpendiculaire par rapport à l'axe (16) de rotation de la charnière.

15. Procédé selon l'une des revendications 12 à 14, **caractérisé en ce qu'**il comporte l'étape suivante
- interposer entre un connecteur électrique (17) et la charnière un moyen de rétention (24) de fils électriques.

16. Procédé selon la revendication 15, **caractérisé en ce qu'**il comporte l'étape suivante
- insérer des extrémités de fils électriques (5) au travers du moyen de rétention (24).

## Claims

1. An electrical cabinet (1), comprising
- an electrical housing (2) forming an inner electrical equipment compartment (11),
- a door (3) for closing this compartment (11),
- a hinge (4) formed by a first connecting means (13) and by a second connecting means (14), the first connecting means (13) being attached to the housing, the second connecting means (14) being attached to the door, the first means and the second means hinging around an axis (16) of rotation of the hinge,
- at least one set of electrical components installed on the door and/or inside the compartment, and
- electric wires (5) connected to the electrical components, **characterized in that**
- the electric wires (5) are arranged in adjacent wire layers, the plane of these layers being perpendicular to the axis (16) of the hinge, the wires of these layers being arranged in curves, on this plane, in two directions, and **in that**
- the connecting means (13, 14) are drilled with a passage orifice (18, 19) through which the electric wires (5) are routed, the passage orifice (18, 19) being formed longitudinally to an axis (29) of insertion for the electric wires (5) which the hinge, the axis of insertion being a perpendicular axis to the axis (16) of rotation.

2. A cabinet according to claim 1, **characterized in that** each of the electric wires (5) is formed into a loop on a plane perpendicular to the axis (16) of the hinge.

3. A cabinet according to claim 1 or 2, **characterized in that** the electric wires (5) in a layer are held through the hinge by an elastic holding element (40) that wraps them.

4. A cabinet according to any one of claims 1 to 3, **characterized in that** the set of components is installed on the inside of the door (3), facing the compartment (11).

5. A cabinet according to any one of claims 1 to 3, **characterized in that** the set of components is installed on the outside of the door (3).

6. A cabinet according to any one of claims 1 to 5, **characterized in that** it has a connector (17) attached to a connecting means (13, 14), preferably connectors attached to each of the connecting means.

7. A cabinet according to claim 6, **characterized in that**
- each electric wire (5) has a first end and a second end, the first end being far from the connector (17) while the second is close to the connector, and
- a retaining means (24) for the second end of the wire is inserted between the connector (17) and the connecting means connected to the connector, this retaining means (24) holding the second end of the wire firmly in place with regard to the connector (17) when connecting to or disconnecting from the connector (17) with an additional connector.

8. A cabinet according to claim 7, **characterized in that** the retaining means (24) forms a block of elastic material drilled with many holes evenly distributed with respect to one another, each of the holes being formed along an axis perpendicular to the hinge's axis (16) of rotation, and each of these holes being designed to be traversed by an electric wire.

9. A cabinet according to claim 7, **characterized in that** the retaining means forms a clamp compressing the wires (5) perpendicularly to an axis (29) of insertion for the wires in the means for connecting to the housing or to the door.

10. A cabinet according to any one of claims 1 to 9, **characterized in that** the first connecting means (13) and the second connecting means (14) each form a part that is identical to one another.

11. A cabinet according to any one of claims 1 to 10, **characterized in that** the first connecting means (13) and the second connecting means (14) each form a part that results from molding an insulating material.

12. A method of assembling an electrical cabinet according to any one of the previous claims, **characterized in that** it includes the following step
- insert the electric wires (5) through the hinge perpendicularly to the axis of rotation.

13. A method of assembling according to claim 12, **characterized in that** it includes the following steps
- attach a first end of the electric wire to an electrical connector (17), and
- attach a second end of a wire to an electrical component.

14. A method according to any one of claims 12 to 13, **characterized in that** it includes the following step
- group multiple electric wires (5) through the hinge by wrapping them by means of a holding element (40) to hold the wires (5) stretched along an axis perpendicular to the hinge's axis (16) of rotation.

15. A method according to any one of claims 12 to 14, **characterized in that** it includes the following step
- insert an electric wire retaining means (24) between an electrical connector (17) and the hinge.

16. A method according to claim 15, **characterized in that** it includes the following step
- insert the ends of electric wires (5) through the retaining means (24).

## Patentansprüche

1. Elektrischer Schaltschrank (1), mit
- einem Elektrogehäuse (2), das innen ein Elektroausrüstungsabteil (11) bildet,
- einer Türe (3) zum Verschließen dieses Abteils (11)
- einem Scharnier (4), das durch eine erste Verbindungsvorrichtung (13) und eine zweite Verbindungsvorrichtung (14) gebildet wird, wobei die erste Verbindungsvorrichtung (13) am Gehäuse befestigt ist, und die zweite Verbindungsvorrichtung (14) an der Türe befestigt ist, wobei sich die erste und die zweite Verbindungsvorrichtung um eine Rotationsachse (16) des Scharniers drehen,
- zumindest einem Satz an Elektrobauteilen, die an der Türe und/ oder im Inneren des Abteils installiert sind, und
- Elektrokabeln (5), die an die Elektrobauteile angeschlossen sind, **dadurch gekennzeichnet, dass**
- die Elektrokabel (5) in Bändern bestehend aus nebeneinander liegenden Kabeln angeordnet sind, wobei die Ebene dieser Bänder normal zur Achse (16) des Scharniers liegt und die Kabel dieser Bänder Krümmungen auf dieser Ebene in beide Richtungen aufweisen, und **dadurch**, dass
- in die Verbindungsvorrichtungen (13, 14) ein Durchgangsloch (18, 19) gebohrt ist, durch das die Elektrokabel (5) geführt werden, und das Durchgangsloch (18, 19) längs zu einer Einführungsachse (29) der Elektrokabel (5) durch das Scharnier geführt ist, und diese Einführungsachse eine Achse ist, die normal zur Rotationsachse (16) steht.

2. Schaltschrank nach Anspruch 1, **dadurch gekennzeichnet, dass** jedes der Elektrokabel (5) in Form eines Henkels ausgeführt ist, dessen Ebene normal zur Scharnierachse (16) steht.

3. Schaltschrank nach Anspruch 1 oder 2, **dadurch gekennzeichnet, dass** die Elektrokabel (5) eines Bandes durch ein elastisches Halteelement (40) durch das Scharnier hindurch festgehalten werden, von dem sie umgeben werden.

4. Schaltschrank nach einem der Ansprüche 1 bis 3, **dadurch gekennzeichnet, dass** der Bauteilesatz innerhalb der Türe (3), gegenüber dem Abteil (11) installiert ist.

5. Schaltschrank nach einem der Ansprüche 1 bis 3, **dadurch gekennzeichnet, dass** der Bauteilesatz außerhalb der Türe (3) installiert ist.

6. Schaltschrank nach einem der Ansprüche 1 bis 5, **dadurch gekennzeichnet, dass** er einen Stecker (17) enthält, der an einer der Verbindungsvorrichtungen (13, 14) befestigt ist, wobei die Stecker vorzugsweise an jeder der Verbindungsvorrichtungen befestigt sind.

7. Schaltschrank nach Anspruch 6, **dadurch gekennzeichnet, dass**
- jedes Elektrokabel (5) ein erstes Ende und ein zweites Ende aufweist, wobei das erste Ende weiter vom Stecker (17) entfernt ist, während das zweite näher beim Stecker liegt, und
- eine Rückhaltevorrichtung (24) des zweiten Kabelendes zwischen dem Stecker (17) und der Verbindungsvorrichtung platziert wird, die mit dem Stecker verbunden ist, wobei diese Rückhaltevorrichtung (24) das zweite Kabelende bei einem Anstecken oder Abstecken des Steckers (17) mit einem ergänzenden Stecker fest auf Höhe des Steckers (17) festhält.

8. Schaltschrank nach Anspruch 7, **dadurch gekennzeichnet, dass** die Rückhaltevorrichtung (24) einen Block aus elastischem Material bildet, durch den eine Vielzahl von Löchern führt, die gleichförmig auf die Fläche verteilt sind, wobei jedes der Löcher entlang einer Achse führt, die normal zur Rotationsachse (16) des Scharniers steht, und jedes der Löcher dazu bestimmt ist, als Durchführung eines Elektrokabels zu fungieren.

9. Schaltschrank nach Anspruch 7, **dadurch gekennzeichnet, dass** die Rückhaltevorrichtung eine Kabelklemmvorrichtung bildet, die die Kabel (5) normal zu einer Achse (29) zum Einführen der Kabel in die Verbindungsvorrichtung gegen das Gehäuse oder gegen die Türe drückt.

10. Schaltschrank nach einem der Ansprüche 1 bis 9, **dadurch gekennzeichnet, dass** die erste Verbindungsvorrichtung (13) und die zweite Verbindungsvorrichtung (14) jeweils zueinander identische Teile bilden.

11. Schaltschrank nach einem der Ansprüche 1 bis 10, **dadurch gekennzeichnet, dass** die erste Verbindungsvorrichtung (13) und die zweite Verbindungsvorrichtung (14) jeweils ein Teil aus einem Abguss eines isolierenden Materials bilden.

12. Verfahren zum Montieren eines elektrischen Schaltschranks nach einem der vorherigen Ansprüche, **dadurch gekennzeichnet, dass** es den folgenden Schritt enthält
- das Einführen der Elektrokabel (5) durch das Scharnier normal zur Rotationsachse.

13. Montageverfahren nach Anspruch 12, **dadurch gekennzeichnet, dass** es die folgenden Schritte enthält
- das Befestigen eines ersten Elektrokabelendes an einem Elektrostecker (17), und
- das Befestigen eines zweiten Elektrokabelendes an einem Elektrobauteil.

14. Verfahren nach einem der Ansprüche 12 bis 13, **dadurch gekennzeichnet, dass** es den folgenden Schritt enthält
- das Zusammenführen mehrerer Elektrokabel (5) durch das Scharnier, indem man sie mit einem Halteelement (40) umhüllt, um die Elektrokabel (5) entsprechend einer Achse gespannt zu halten, die normal zur Rotationsachse (16) des Scharniers steht.

15. Verfahren nach einem der Ansprüche 12 bis 14, **dadurch gekennzeichnet, dass** es den folgenden Schritt enthält
- das Zwischenlegen einer Rückhaltevorrichtung (24) für Elektrokabel zwischen einem Elektrostecker (17) und dem Scharnier.

16. Verfahren nach Anspruch 15, **dadurch gekennzeichnet, dass** es den folgenden Schritt enthält
- das Durchführen der Elektrokabelenden (5) durch die Rückhaltevorrichtung (24).
